# EUROPÄISCHE PATENTSCHRIFT

(11) **EP 2 522 210 B1**
(45) Veröffentlichungstag und Bekanntmachung des Hinweises auf die Patenterteilung: **29.11.2017**
(21) Anmeldenummer: 12003460.8
(22) Anmeldetag: 04.05.2012
(51) Int. Cl.: A01D 41/12, A01D 41/02, A01F 12/54

(54) **Mähdrescher**
Combine harvester
Moissonneuse-batteuse

(30) Priorität: 12.05.2011 DE 102011101371
(43) Veröffentlichungstag der Anmeldung: 14.11.2012
(73) Patentinhaber: CLAAS Selbstfahrende Erntemaschinen GmbH, 33428 Harsewinkel (DE)
(72) Erfinder: Rottmann, Fabian, 33824 Werther (DE); Theißing, Gerhard, 33428 Harsenwinkel (DE); Niermann, Martin, 33428 Harsenwinkel (DE)
(74) Vertreter: Heuer, Wilhelm

(56) Entgegenhaltungen:
- EP-A1- 2 111 738
- EP-A1- 2 340 703
- EP-A2- 2 241 174
- WO-A1-97/08937
- DE-B- 1 228 094
- DE-B- 1 927 262
- DE-U- 6 919 152
- US-A- 4 711 253
- US-B1- 6 796 897

## Beschreibung

Das Gehäuse eines Mähdreschers hat herkömmlicherweise an seinem hinteren Ende eine sogenannte Strohausfallhaube, einen nach unten offenen Gehäusefortsatz, über den im Erntebetrieb ausgedroschenes Stroh auf die beerntete Fläche ausgegeben wird. Zusammen mit dem Stroh werden große Mengen von mit dem Erntegut aufgenommenen oder beim Dreschen entstandenen feinen und leichten Partikeln wie etwa Staub, Spelzen oder dergleichen über die Strohausfallhaube ausgeschieden. Diese leichten Partikel werden beim Austritt stark verwirbelt, sodass der Mähdrescher im Betrieb häufig ringsum von einer Staubwolke umgeben ist. Für den Fahrer des Mähdreschers ist es lästig, wenn diese Partikel in die Fahrerkabine eindringen. Wenn sie sich auf heißen Oberflächen des Mähdreschers absetzen, können sie dort die Kühlung beeinträchtigen. Es ist daher wünschenswert, die Partikel von Teilen des Mähdreschers, wo sie den Betrieb stören, fernzuhalten.

DE 69 19 152 U1 offenbart einen Mähdrescher, bei dem über den benachbart zum Auswurfkanal für das Stroh an der Rückseite des Strohausfallhaube endenden Luftkanal stark mit Partikeln belastete Luft aus dem Inneren des Mähdreschergehäuses abgesaugt und nach unten ausgestoßen wird, um übermäßige Partikelansammlungen im Innern des Mähdreschergehäuses und die Ausbreitung der Partikel von dort in die Fahrerkabine zu bekämpfen. Wenn die aus dem vertikal abwärts gerichteten Luftkanal ausgestoßene, partikelbeladene Luft auf den Boden trifft, verteilt sie sich dort in alle Richtungen, auch in der Fahrtrichtung. Auch dieser Mähdrescher kann daher im Betrieb ringsum von einer Partikelwolke umgeben sein, sodass die Partikel von außen in die Fahrerkabine gelangen und sich am Gehäuse absetzen können.

Aus WO97/08937 A1 ist ein Mähdrescher nach dem Oberbegriff des Anspruchs 1 bekannt. Der Luftkanal endet bei diesem herkömmlichen Mähdrescher an einer Eingangsseite der Strohausfallhaube und soll einen starken Luftstrom in der Strohausfallhaube erzeugen, der das Stroh mitreißt und für eine weiträumige Verteilung sorgt. Feine Partikel, die den Auswurf luftstrom verlassen, können vom Wind weggetragen werden und zur Fahrerkabine gelangen.

Aufgabe der vorliegenden Erfindung ist, einen Mähdrescher zu schaffen, der mit einfachen Mitteln wirksamer vor Partikeln geschützt ist.

Die Aufgabe wird gelöst, indem bei einem Mähdrescher mit einer heckseitig an einem Mähdreschergehäuse angeordneten Strohausfallhaube, in der ein Auswurfkanal, über den ausgedroschenes Stroh aus dem Mähdrescher ausgeworfen wird, und ein Luftkanal enden, eine Ansaugöffnung des Luftkanals außen am Mähdreschergehäuse platziert ist, um von Druschpartikeln im Wesentlichen freie Luft anzusaugen, und eine Austrittsöffnung des Luftkanals sich an der Strohausfallhaube beiderseits eines Ausgangs des Auswurfkanals erstreckende Bereiche aufweist, um einen Luftvorhang beiderseits des austretenden Strohs zu erzeugen. Da von Druschpartikeln im Wesentlichen freie Luft angesaugt wird, ist die am Ende des Luftkanals austretende Luft ist ebenfalls von Druschpartikeln im Wesentlichen frei, und sie bildet eine Barriere für die Ausbreitung von Partikeln aus dem ausgeworfenen Stroh, da diese den aus dem Luftkanal austretenden, vom Mähdrescher fort gerichteten Luftstrom nicht durchdringen können, sondern allenfalls mit dem Luftstrom vom Mähdrescher weggetragen werden. So wird die Ausbreitung von Partikeln aus dem Stroh entlang der seitlichen Flanken des Mähdreschergehäuses nach vorn unterdrückt.

Diese Bereiche können zweckmäßigerweise ausgerichtet sein, um von der Strohausfallhaube aus seitwärts auseinanderlaufende Luftströme zu erzeugen. Diese werden, wenn sie unter einem spitzen Winkel auf den Boden treffen, nur wenig gebremst und verwirbelt, so dass sie die Partikel, die aus dem ausgeworfenen Stroh in diese Luftströme eindringen, weit vom Mähdrescher forttragen können.

Eine Austrittsöffnung des Luftkanals kann sich auch hinter einem Ausgang des Auswurfkanals erstrecken, um mittels eines von dort ausgehenden Luftstroms von dem Stroh freigesetzte Partikel entgegen der Fahrtrichtung vom Mähdrescher fortzutragen.

Die Ansaugöffnung des Luftkanals kann zweckmäßigerweise höhenverstellbar sein. So kann sich die Ansaugöffnung, während sich der Mähdrescher auf einer öffentlichen Straße bewegt, in einer abgesenkten Stellung befinden, wohingegen im Ernteeinsatz die Ansaugöffnung bis in eine im Straßenverkehr unzulässige Höhe angehoben sein kann, um weit vom Boden entfernt möglichst partikelarme Frischluft anzusaugen.

Zum Antreiben des Luftstroms sollte ein Ventilator im Luftkanal angeordnet sein.

Zweckmäßigerweise kann ferner ein Kühler im Luftkanal angeordnet sein, um Abwärme eines Motors des Mähdreschers an die im dem Luftkanal zirkulierende Luft abzuführen.

Der Luftkanal sollte möglichst kurz sein, um den Mähdrescher insgesamt kompakt bauen zu können. Hierfür ist es insbesondere zweckmäßig, wenn der Kühler und/oder der Ventilator in oder auf der Strohausfallhaube angeordnet ist.

Selbst wenn mit Hilfe des an der Strohausfallhaube austretenden Luftstroms mit dem Stroh ausgeworfene Partikel wirksam vom Mähdrescher fortgetragen werden, genügt dies nicht, um die Luft vor dem Mähdrescher frei von Partikel zu halten, da auch ein vorn am Mähdreschergehäuse, montierter Erntevorsatz unvermeidlicherweise Partikel aufwirbelt. Um diese vom Luftkanal fernzuhalten, kann ein Partikelfilter in einem stromaufwärtigen Abschnitt des Luftkanals angeordnet sein.

Ein Verbrennungsluftkanal für die Luftversorgung des Motors kann zweckmäßigerweise stromabwärts vom Partikelfilter von dem Luftkanal abzweigen, um den Motor mit partikelfreier Verbrennungsluft zu versorgen.

Weitere Merkmale und Vorteile der Erfindung ergeben sich aus der nachfolgenden Beschreibung von Ausführungsbeispielen unter Bezugnahme auf die beigefügten Figuren., Es zeigen:
- Fig. 1: eine schematische, teilweise geschnittene Seitenansicht eines erfindungsgemäßen Mähdreschers; und
- Fig. 2: einen Schnitt durch die Strohausfallhaube des Mähdreschers entlang der Ebene II-II aus Fig. 1.

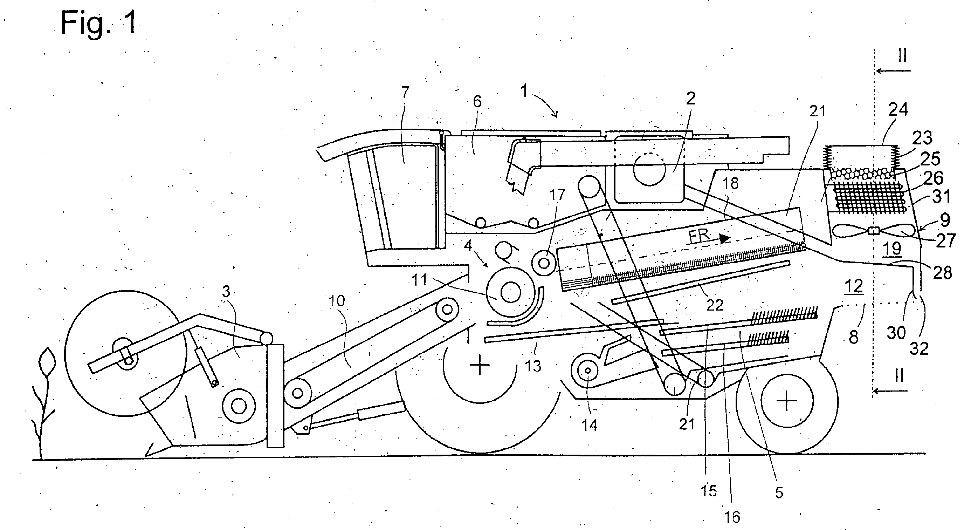

Der in Fig. 1 schematisch dargestellte Mähdrescher hat ein in etwa kastenförmiges Gehäuse 1, in dem benachbart zu seiner Oberseite in zentraler Position ein Verbrennungsmotor 2 untergebracht ist. Vor dem Motor 2 befinden sich ein Korntank 6 und eine Fahrerkabine 7, unter ihm von dem Motor 2 angetriebene Verarbeitungseinrichtungen des Mähdreschers, nämlich eine Dreschstufe 4 und eine Reinigungsstufe 5.

Die Dreschstufe 4 umfasst in an sich bekannter Weise eine Dreschtrommel 11, die Erntegut von einem Schneidwerk 3 über einen Schrägförderer 10 empfängt, eine Wendetrommel 17 und einen Axialrotor 18, durch dessen durchbrochene Wände ausgedroschenes Korn über einen Rücklaufboden 22 und einen Vorbereitungsboden 13 zur Reinigungsstufe 5 gelangt, während ausgedroschenes Stroh den Axialrotor 18 an seinem offenen rückwärtigen Ende 21 verläst und einer Auswurföffnung 8 an der Unterseite einer heckseitig vom Gehäuse 1 abstehenden Strohausfallhaube 9 zugeführt wird.

Die Reinigungsstufe 5 umfasst zwei übereinander angeordnete, rüttelnd bewegte Siebe 15, 16, denen das noch mit Spelzen, ausgedroschenen Ährenbruchstücken und anderen leichten Partikeln verunreinigte Korn vom Vorbereitungsboden 13 aus zugeführt wird, und ein Gebläse 14, dessen Luftstrom die leichten Partikel über die Siebe 15, 16 hinweg zur Auswurföffnung 8 trägt.

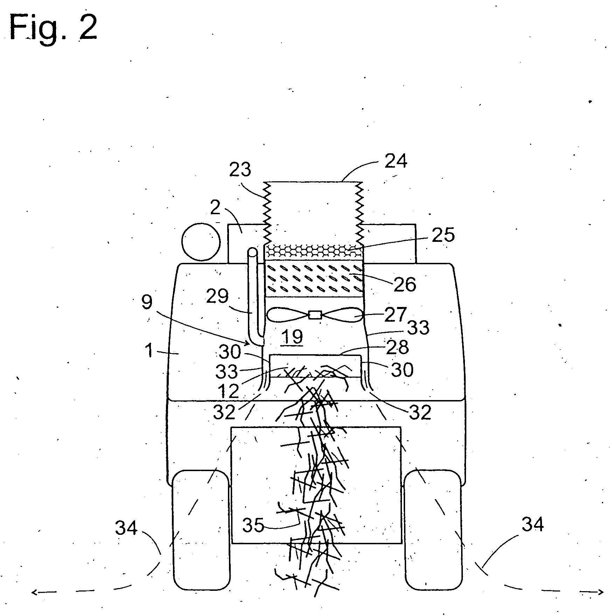

Die Strohausfallhaube 9 ist im Inneren unterteilt in einen Auswurfkanal 12, der von dem Stroh aus dem Axialrotor 18 und den in der Reinigungsstufe 5 ausgeschiedenen Partikeln durchlaufen wird und an der Auswurföffnung 8 endet, einerseits und einen Luftkanal 19 andererseits. Eine Ansaugöffnung 24 des Luftkanals 19 ist an der Oberseite, der Strohausfallhaube 9 vorgesehen. Sie ist hier durch das offene obere Ende eines an der Oberseite der Strohausfallhaube 9 montierten, ausfahrbaren Faltenbalgs. 23 gebildet; alternativ käme auch ein Aufbau aus teleskopisch ineinandergeschachtelten Blechhülsen in' Betracht. Bei Straßenfahrt ist der Faltenbalg 23 wie in Fig. 1 gezeigt zusammengelegt, so dass die Ansaugöffnung 24 nicht über das Gehäuse 1 hinaus aufragt. Im Ernteeinsatz ist der Faltenbalg ausgefahren, wie in Fig. 2 gezeigt, um die Ansaugöffnung 24 weit vom Boden entfernt zu halten und staubarme Frischluft ansaugen zu können.

Am Fuß des Faltenbalgs 23 befindet sich ein Partikelfilter 25 und unter diesem, im Inneren der Strohausfallhaube 9, ein Kühler 26; durch den Kühlwasser des Motors 2 zirkuliert. Unterhalb des Kühlers 26 ist ein Ventilator 27 angeordnet, der Luft durch den Partikelfilter 25 und den Kühler 26 hindurchsaugt und gegen eine im Wesentlichen horizontale, den Luftkanal 19 vom Auswurfkanal 12 trennende Prallwand 28 drückt. Eine Rohrleitung 29 erstreckt sich vom Luftkanal 19 zum Motor 2, um diesem einen Teil der an der Prallwand 28 aufgestauten Luft als partikelfreie Verbrennungsluft zuzuführen. Die restliche Luft entweicht über eine zur Auswurföffnung 8 benachbarte Austrittsöffnung 32 an der Unterseite der Strohausfallhaube 9.

In dem Schnitt der Fig. 1 ist eine sich von einer Hinterkante der Prallwand 28 abwärts erstreckende Wand 30 zu sehen, die zusammen mit einer hinteren Außenwand 31 der Strohausfallhaube 9 einen vertikalen Spalt begrenzt, in dem die Luft abwärts zur Austrittsöffnung 32 strömt. Die Wand 30 ist an ihrem unteren Ende nach außen gekrümmt, um an der Austrittsöffnung 32 den Luftstrom schräg nach hinten, entgegen der Fahrtrichtung des Mähdreschers, abzulenken. Die Austrittsöffnung 32 erstreckt sich über die gesamte Breite der Außenwand 31.

Wie in dem Schnitt der Fig. 2 zu erkennen, ist die Prallwand 28 auch in seitlicher Richtung durch abwärtsgerichtete, an ihrem unteren Ende auswärts gekrümmte Wände 30 begrenzt, die mit seitlichen Außenwänden 33 der Strohausfallhaube 9 Spalte begrenzen, in denen die Luft abwärts strömt. So umgibt die Austrittsöffnung 32 des Luftkanals 19 die Auswurföffnung 8 sowohl nach hinten als auch an beiden Seiten.

Wie in Fig. 2 durch gestrichelte Pfeile dargestellt, erzeugt die Austrittöffnung 32 einen Vorhang 34 aus schräg nach unten und seitwärts strömender Luft auf beiden Seiten des sich aus der Auswurföffnung 8 ergießenden Strohs 35. Partikel, die beim Auftreffen des Strohs 35 auf den Boden aufgewirbelt werden, werden, sobald sie von dem Luftvorhang 34 erfasst werden, seitwärts oder nach hinten vom Mähdrescher fortgetragen. Sie können also nicht in unmittelbarer Nachbarschaft zum Gehäuse 1 aufsteigen und sich an diesem absetzen oder die Fahrerkabine 7 erreichen.

### Bezugszeichen

- 1: Gehäuse
- 2: Motor
- 3: Schneidwerk
- 4: Dreschstufe
- 5: Reinigungsstufe
- 6: Korntank
- 7: Fahrerkabine
- 8: Auswurföffnung
- 9: Strohhaube
- 10: Schrägförderer
- 11: Dreschtrommel
- 12: Auswurfkanal
- 13: Vorbereitungsboden
- 14: Gebläse
- 15: Sieb
- 16: Sieb
- 17: Weridetrommel
- 18: Axialrotor
- 19: Luftkanal
- 20 21: Ende
- 22: Rücklaufboden
- 23: Faltenbalg
- 24: oberes Ende, Ansaugöffnung
- 25: Partikelfilter
- 26: Kühler
- 27: Ventilator
- 28: Prallwand.
- 29: Leitung
- 30: Wand
- 31: Außenwand
- 32: Austrittsöffnung
- 33: seitliche Außenwand
- 34: Luftvorhang
- 35: Stroh

## Patentansprüche

1. Mähdrescher mit einer heckseitig an einem Mähdreschergehäuse (1) angeordneten Strohausfallhaube (9), in der ein Auswurfkanal (12), über den ausgedroschenes Stroh (35) aus dem Mähdrescher ausgeworfen wird, und ein Luftkanal (19) enden, wobei eine Ansaugöffnung (24) des Luftkanals (19) außen am Mähdreschergehäuse (1) platziert ist, um von Druschpartikeln im Wesentlichen freie Luft anzusaugen, **dadurch gekennzeichnet, dass** eine Austrittsöffnung (32) des Luftkanals (19) sich an der Strohausfallhaube (9) beiderseits eines Ausgangs (8) des Auswurfkanals (12) erstreckende Bereiche aufweist, um einen Luftvorhang beiderseits des austretenden Strohs zu erzeugen.

2. Mähdrescher nach Anspruch 1, **dadurch gekennzeichnet, dass** die Bereiche ausgerichtet sind, um von der Strohausfallhaube (9) aus seitwärts auseinanderlaufende Luftströme (34) zu erzeugen.

3. Mähdrescher nach einem der vorhergehenden Ansprüche, **dadurch gekennzeichnet, dass** eine Austrittsöffnung (32) des Luftkanals (19) sich hinter einem Ausgang (8) des Auswurfkanals (12) erstreckt.

4. Mähdrescher nach Anspruch 3, **dadurch gekennzeichnet, dass** die Austrittsöffnung (32) ausgerichtet ist, um einen sich von der Strohausfallhaube (9) in Rückwärtsrichtung des Mähdreschers ausbreitenden Luftstrom zu erzeugen.

5. Mähdrescher nach einem der vorhergehenden Ansprüche, **dadurch gekennzeichnet, dass** die Ansaugöffnung (24) höhenverstellbar ist.

6. Mähdrescher nach einem der vorhergehenden Ansprüche, **dadurch gekennzeichnet, dass** ein Kühler (26) und/oder ein Ventilator (27) im Luftkanal (19) angeordnet ist.

7. Mähdrescher nach Anspruch 6, **dadurch gekennzeichnet, dass** der Kühler (26) und/oder der Ventilator (27) in oder auf der Strohausfallhaube (9) angeordnet ist.

8. Mähdrescher nach einem der vorhergehenden Ansprüche, **dadurch gekennzeichnet, dass** ein Partikelfilter (25) in einem stromaufwärtigen Abschnitt des Luftkanals (19) angeordnet ist

9. Mähdrescher nach einem der vorhergehenden Ansprüche, **dadurch gekennzeichnet, dass** ein Verbrennungsluftkanal (29) des Motors (2) stromabwärts vom Partikelfilter (25) von dem Luftkanal (19) abzweigt.

## Claims

1. Combine harvester with a straw discharge hood (9), arranged at the rear end of a combine harvester housing (1), in which an ejection channel (12) via which threshed straw (35) is ejected from the combine harvester and an air duct (19) end, wherein an air intake opening (24) of the air duct (19) is positioned on the outside of the combine harvester housing (1) in order to suck in air which is substantially free of threshed particles, **characterised in that** an outlet opening (32) of the air duct (19) has regions extending on the straw discharge hood (9) on each side of an outlet (8) of the ejection channel (12) in order to create an air curtain on each side of the discharged straw.

2. Combine harvester according to claim 1, **characterised in that** said regions are oriented so as to create air flows (34) diverging to the sides from the straw discharge hood (9).

3. Combine harvester according to one of the preceding claims, **characterised in that** an outlet opening (32) of the air duct (19) extends behind an outlet (8) of the ejection channel (12).

4. Combine harvester according to claim 3, **characterised in that** the outlet opening (32) is oriented so as to create air flows spreading out from the straw discharge hood (9) in a backwards direction relative to the combine harvester.

5. Combine harvester according to one of the preceding claims, **characterised in that** the air intake opening (24) is adjustable in height.

6. Combine harvester according to one of the preceding claims, **characterised in that** a cooler (26) and/or a fan (27) is arranged in the air duct (19).

7. Combine harvester according to claim 6, **characterised in that** the cooler (26) and/or the fan (27) is arranged in or on the straw discharge hood (9).

8. Combine harvester according to one of the preceding claims, **characterised in that** a particle filter (25) is arranged in an upstream section of the air duct (19) .

9. Combine harvester according to one of the preceding claims, **characterised in that** a combustion air duct (29) of the engine (2) branches off downstream of the particle filter (25) of the air duct (19).

## Revendications

1. Moissonneuse-batteuse à hotte de décharge de paille (9), agencée à l'extrémité arrière d'un corps de moissonneuse-batteuse (1), dans laquelle un canal d'éjection (12) par l'intermédiaire duquel la paille battue (35) est éjectée de la moissonneuse-batteuse et un conduit d'air (19) se terminent, dans laquelle une ouverture d'entrée d'air (24) du conduit d'air (19) est positionnée sur l'extérieur du corps de moissonneuse-batteuse (1) afin d'aspirer un air sensiblement dépourvu de particules battues, **caractérisée en ce qu'**une ouverture de sortie (32) du conduit d'air (19) comporte des régions s'étendant sur la hotte de décharge de paille (9) de chaque côté d'une sortie (8) du canal d'éjection (12) afin de créer un rideau d'air de chaque côté de la paille déchargée.

2. Moissonneuse-batteuse selon la revendication 1, **caractérisée en ce que** lesdites régions sont orientées de manière à créer des flux d'air (34) déviant vers les côtés depuis la hotte de décharge de paille (9).

3. Moissonneuse-batteuse selon l'une des revendications précédentes, **caractérisée en ce qu'**une ouverture de sortie (32) du conduit d'air (19) s'étend derrière une sortie (8) du canal d'éjection (12).

4. Moissonneuse-batteuse selon la revendication 3, **caractérisée en ce que** l'ouverture de sortie (32) est orientée de manière à créer des flux d'air s'étalant depuis la hotte de décharge de paille (9) vers l'arrière par rapport à la moissonneuse-batteuse.

5. Moissonneuse-batteuse selon l'une des revendications précédentes, **caractérisée en ce que** l'ouverture d'entrée d'air (24) est réglable en hauteur.

6. Moissonneuse-batteuse selon l'une des revendications précédentes, **caractérisée en ce qu'**un radiateur (26) et/ou un ventilateur (27) est agencé dans le conduit d'air (19).

7. Moissonneuse-batteuse selon la revendication 6, **caractérisée en ce que** le radiateur (26) et/ou le ventilateur (27) est agencé dans ou sur la hotte de décharge de paille (9).

8. Moissonneuse-batteuse selon l'une des revendications précédentes, **caractérisée en ce qu'**un filtre à particules (25) est agencé dans une section amont du conduit d'air (19).

9. Moissonneuse-batteuse selon l'une des revendications précédentes, **caractérisée en ce qu'**un conduit d'air de combustion (29) du moteur (2) bifurque en aval du filtre à particules (25) du conduit d'air (19).
